## Europäisches Patentamt
## European Patent Office
## Office européen des brevets

(11) Veröffentlichungsnummer: **0 105 147**
**A1**

## (12) EUROPÄISCHE PATENTANMELDUNG

(21) Anmeldenummer: **83108046.0**

(51) Int. Cl.³: **G 01 C 21/12**

(22) Anmeldetag: **13.08.83**

(30) Priorität: **31.08.82 DE 3232266**

(43) Veröffentlichungstag der Anmeldung: **11.04.84**
Patentblatt 84/15

(84) Benannte Vertragsstaaten: **CH FR GB IT LI**

(71) Anmelder: **TELDIX GmbH, Grenzhöfer Weg 36 Postfach 105608, D-6900 Heidelberg 1 (DE)**

(72) Erfinder: **Müller, Paul, Dr. rer.nat., Am Büchsenackerhang 35, D-6900 Heidelberg 1 (DE)**
Erfinder: **Fuchs, Jörg, Ing., Oesinger Strasse 3a, D-6908 Wiesloch (DE)**

(74) Vertreter: **Kammer, Arno, Dipl.-Ing., TELDIX GmbH Postfach 10 56 08 Grenzhöfer Weg 36, D-6900 Heidelberg 1 (DE)**

(54) Verfahren zur autonomen Bestimmung der Koordinaten und Höhe einer Geschützstellung.

(57) Gegenstand der Anmeldung ist ein Verfahren zur autonomen Bestimmung der Koordinaten und der Höhe eines Geländepunktes mit Hilfe einer über eine längere Periode nicht ausreichend genauen Koppelnavigationsanlage.

Hierzu wird auf dem Weg zu diesem Punkt, z.B. einer Geschützstellung und möglichst nahe dabei, ein in seinen Koordinaten und seiner Höhe bekannter Meßpunkt angefahren und dort wird die Navigationsanlage und ein mitgeführter Höhenmesser auf diese Werte korrigiert. Ausgehend von diesen Werten geben die Navigationsanlage und der Höhenmesser am Ort der Geschützstellung ausreichend genaue Werte an.

T E L D I X  G m b H

Postfach 10 56 08

Grenzhöfer Weg 36

6900  Heidelberg 1

Heidelberg, 10. August 1983
PT-Ka/Ba        E-528 EPÜ

Verfahren zur autonomen Bestimmung der
Koordinaten und Höhe einer Geschützstellung

Die Erfindung betrifft ein Verfahren zur autonomen Bestimmung der Koordinaten und der Höhe eines Fahrzeugstandorts
unter Verwendung einer mitgeführten Koppelnavigationsanlage.

Bekanntlich muß der Standort und die Höhe einer Geschützstellung oder der Standort eines militärischen Beobachtungsfahrzeugs relativ genau bekannt sein, um eine gewisse Treffsicherheit zu gewährleisten. Andererseits muß zur eigenen
Sicherheit die Stellung relativ häufig gewechselt werden.
Man führt deshalb im Trägerfahrzeug oder Zugfahrzeug eine
Koppelnavigationsanlage mit, die aus den genannten Gründen
über einen langen Zeitraum hochgenau sein muß und deshalb
sehr teuer ist. Die Höhe der Geschützstellung bzw. des Beobachtungsorts wird aus der Karte bei durch die Navigationsanlage gegebenen Standortkoordinaten ermittelt. Dies gilt
auch für Vermessungsfahrzeuge.

Der Erfindung liegt die Aufgabe zugrunde, ein Verfahren zu
schaffen, durch das die Anforderungen an die Genauigkeit
der Navigationsanlage und damit deren Preis verringert werden können und bei dem außerdem die Höhe der Stellung einfacher ermittelt werden kann.

Das zur Lösung dieser Aufgabe vorgeschlagene Verfahren ist dadurch gekennzeichnet, daß von Zeit zu Zeit und möglichst nahe einem anzufahrenden Geländepunkt ein in seinem Koordinaten und seiner Höhe bekannter Meßpunkt im Gelände angefahren wird, daß dort die Navigationsanlage mittels der Standortkoordinaten sowie ein Höhenmesser mittels der Höhe des Meßpunkts korrigiert wird (up-daten) und daß mittels dieser korrigierten Meßgeräte in dem angefahrenen Geländepunkt dessen Koordinaten und Höhe festgelegt wird.

Die Erfindung macht sich die Tatsache zunutze, daß z.B. in militärischen Karten für einzelne markante Geländepunkte deren Koordinaten und Höhe hinreichend genau angegeben sind. Ein solcher Geländepunkt mit diesen Angaben ist z.B. innerhalb jeweils eines Quadrats mit einer Seitenlänge von 1 oder 2 km zu finden, so daß Umwege beim Anfahren solcher Punkte unwesentlich sind. Wie bereits gesagt, werden die im Fahrzeug mitgeführten Meßgeräte (Navigationsanlage und Höhenmesser) nach Anfahren eines nahe der anzufahrenden Geschützstellung liegenden Punkts auf die gegebenen Sollwerte korrigiert. Auch wenn die Meßgeräte nicht von extremer Güte sind, ist damit gewährleistet, daß die Fehler bei Erreichen der Stellung sehr gering sind.

Eine Verbesserung der Ergebnisse erreicht man noch, wenn man Anzeige-Veränderungen auf z.B. barometrischen Höhenmesser nur zuläßt, wenn das Fahrzeug fährt, also bei Fahrzeughalt Anzeigeveränderungen, die beim barometrischen Höhenmesser durch wetterbedingte Druckluftänderungen hervorgerufen werden, nicht zuläßt. Damit sind solche Fehlereinflüsse weitgehend unterdrückt, da ja die reinen Fahrzeiten des Fahrzeuges sehr kurz sind. Wenn die Anzeige durch vom eigentlichen Meßgerät abgegebene Inkremente verändert wird, kann man die Anzeigeveränderung bei Halt dadurch verhindern, daß man die Impulse (Inkremente) bei Halt durch ein Tor unterdrückt. Bei einer Analoganzeige muß bei Halt die erreichte Anzeige festgehalten und eine Nullpunktsverschiebung ermöglicht werden.

Auch den negativen Einfluß der Zufallsdrift des in der
Navigationsanlage verwendeten Kurskreisels kann man weitgehend ausschalten, wenn man bei Fahrzeughalt verhindert,
daß Änderungen des Winkels zwischen Fahrzeugachse und der
Kreiselausrichtung in die Anzeige dieses Winkels eingehen,
da dann nur während der Fahrt auftretende Driftwerte die
Anzeige verfälschen können. Verschiedene Methoden, wie
man dies verhindern kann, sind in der älteren Patentanmeldung P 32 07 551.0 beschrieben. Eine ähnliche Verfahrensweise läßt sich auch mit Hilfe von Neigungsmessern (z.B.
Libellen) durchführen. Die Anzeige der Libellen ist einerseits ziemlich stark temperaturabhängig und unterliegt
einer verhältnismäßig großen Nullpunktdrift. Die Libelle
mißt die Neigung des Fahrzeuges in der Längsachse. Der
Höhenunterschied wird dann ermittelt durch Integration
des Neigungswinkels der Längsachse über den zurückgelegten Weg. Die Driftwerte, sei es Temperatur- oder Nullpunktdrift, können dadurch weitgehend verringert werden, daß man
den Stillstand des Fahrzeuges dazu benutzt, die Nullpunktdrift durch Umschlag der Libellen um 180° herauszukompensieren. In diesem Fall wird die Libelle auf einer relativ
einfachen Umschlagsvorrichtung (z.B. einem Malteserkreuz)
angebracht und bei Ausbleiben der Weggebersignale wird
dann zwecks Nullpunktkalibration um vorgegebene Winkelbeträge umgeschlagen (theoretisch braucht man nicht um 180°
umzuschlagen. Wenn man entsprechende Rechenvorgänge einschaltet, kann man auch mit Umschlägen um Winkel 180° auskommen). Auch die Verwendung eines Libellenpaars für die
Längs- und Querachse ist möglich. Entscheidend ist hierbei
der Gedanke, daß man den bewußten oder zufälligen Halt des
Fahrzeuges automatisch dazu benutzt, einen nur kurzzeitstabilen, für die Höhenmessung geeigneten Sensor jeweils
zu rekalibrieren und/oder jeweils bei Stillstand herankom-

mende Störgrößen (wie z.B. barometrische Druckänderung)
zu unterdrücken.

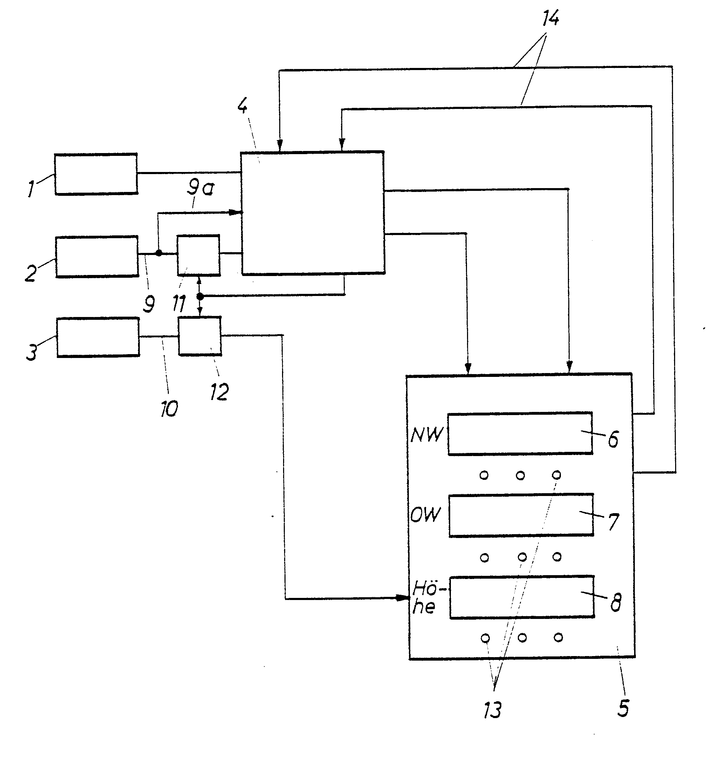

Anhand des Ausführungsbeispiels der Zeichnung soll das erfindungsgemäße Verfahren näher erläutert werden.

Dort ist ein Weggeber mit 1, ein Kurskreisel mit 2 und
ein barometrischer Höhenmesser mit 3 bezeichnet. Weggeber 1 und Kurskreisel 2 sind mit einem Navigationsrechner
4 verbunden, der aus den vom Weggeber 1 kommenden Wegimpulsen (z.B. nach je 1 m) und den aus dem Kurskreisel kommenden, die Winkeländerungen anzeigenden Impulsen, ausgehend von eingegebenen Koordinatenausgangswerten fortlaufend die augenblicklichen Koordinatenwerte des Standorts
berechnet und diese zum Anzeigegerät 5 liefert, wo diese
als Nord- und Ostwerte bei 6 und 7 angezeigt werden.

Mit im Fahrzeug wird auch ein barometrischer Höhenmesser 3
mitgeführt, der bei Druckänderungen Impulse an das Anzeigegerät 5 liefert, die eine Höhenanzeige bei 8 entsprechend
beeinflussen. In die Ausgangsleitungen 9 und 10 des Kurskreisels 2 bzw. Höhenmessers 3 sind Tore 11 bzw. 12 eingeschaltet, mit denen - gesteuert vom Navigationsrechner 4 -
die Leitungen 9 und 10 gesperrt werden können. Die hier
verwendete Navigationsanlage 1, 2 und 4 sei von einer Güteklasse, die - über längere Zeiträume gesehen - nicht in
der Lage ist, den Standort für eine Geschützeinmessung
ausreichend genau anzugeben.

Erfindungsgemäß wird deshalb bei der Fahrt zu einer neuen
Geschützstellung ein Geländepunkt angefahren, dessen Koordinaten exakt und dessen Höhe hinreichend genau (z.B. auf
10 m) bekannt sind. Mittels der Einstellelemente 13 werden
nun die bei 6 bis 8 angezeigten Daten für die Koordinaten
und die Höhe auf die Werte des angefahrenen Punktes korrigiert. Über die Leitungen 14 werden die neuen Koordinatenwerte auch dem Rechner 4 als neue Ausgangsdaten mitgeteilt. Von den neu eingegebenen Daten für die Koordinaten und die Höhe ausgehend werden nun bei der Weiterfahrt zur nahegelegenen Geschützstellung die angezeigten Werte verändert.

Wird dabei noch ein Halt eingelegt, so wird dieser vom Rechner 4 aus dem Verhalten des Weggebers (keine Impulse) und/oder des Kurskreisels (Impulszahl pro Zeitintervall über Leitung 9a < als ein durch die maximale Zufallsdrift gegebener Grenzwert) erkannt und dieser sperrt für die Haltezeit die Tore 11 und 12, so daß durch die durch die Zufallsdrift des Kurskreisels bedingten Änderungen der Kreiselausrichtung und durch die durch wetterbedingte Druckänderungen bedingten Änderungen des Höhenmessers während des Halts keine Verfälschung der Koordinatenwerte bzw. der angezeigten Höhe zustande kommen. Ist das Fahrzeug schließlich in der gewünschten Stellung angekommen, so stehen ausreichend genaue Werte für die Koordinaten und die Höhe dieser Stellung zur Verfügung.

Bei Stellungswechsel in eine relativ nahe gelegene neue Stellung braucht nicht unbedingt ein neuer Meßpunkt angefahren zu werden, da ja nur während der (kurzen) Fahrzeit seit der letzten Korrektur Fehler in den Koordinaten und der Höhe auftreten können.

Patentansprüche

1. Verfahren zur autonomen Bestimmung der Koordinaten und der Höhe eines Fahrzeugstandorts unter Verwendung einer mitgeführten Koppelnavigationsanlage, dadurch gekennzeichnet, daß von Zeit zu Zeit und möglichst nahe einem anzufahrenden Geländepunkt ein in seinen Koordinaten und seiner Höhe bekannter Meßpunkt im Gelände angefahren wird, daß dort die Navigationsanlage mittels der Standortkoordinaten sowie ein Höhenmesser mittels der Höhe des Meßpunkts korrigiert wird (updaten) und daß mittels dieser korrigierten Meßgeräte in dem angefahrenen Geländepunkt dessen Koordinaten und Höhe festgelegt wird.

2. Verfahren nach Anspruch 1, dadurch gekennzeichnet, daß der Höhenmesser während des Stillstands des Trägerfahrzeugs umgeschaltet wird, derart, daß er Änderungen von seiner Anzeige ausschließt.

3. Verfahren nach Anspruch 1 oder 2, dadurch gekennzeichnet, daß der Kurskreisel während des Stillstands des Trägerfahrzeugs umgeschaltet wird, derart, daß driftbedingte Richtungsänderungen des Kurskreisels von seiner Richtungsangabe ausgeschlossen werden.

4. Verfahren nach einem der Ansprüche 1 - 3, dadurch gekennzeichnet, daß ein barometrischer Höhenmesser verwendet wird.

5. Verfahren nach einem der Ansprüche 1 - 3, dadurch gekennzeichnet, daß als Höhenmesser ein Neigungsmesser mit nachgeschaltetem Integrierer verwendet wird.

6. Verfahren nach einem der Ansprüche 1 - 5, dadurch gekennzeichnet, daß der Höhenmesser während eines Fahrzeughalts rekalibriert wird.

0105147

Europäisches
Patentamt

**EUROPÄISCHER RECHERCHENBERICHT**

Nummer der Anmeldung

EP  83 10 8046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | NAVIGATION: JOURNAL OF THE INSTITUTE OF NAVIGATION, Band 12, Nr. 1, 1965, Seiten 77-89, (USA); E.WALL: "A dead-reckoning land vehicle navigation system". *Seite 86* | 1 | G 01 C  21/12 |
| | --- | | |
| Y | US-A-3 839 626  (C.D.KLEM) *Spalte 5, Zeilen 26-59* | 1 | |
| | ----- | | |

| RECHERCHIERTE SACHGEBIETE (Int. Cl. ³) |
|---|
| G 01 C |

Der vorliegende Recherchenbericht wurde für alle Patentansprüche erstellt.

| Recherchenort | Abschlußdatum der Recherche | Prüfer |
|---|---|---|
| DEN HAAG | 09-12-1983 | DE BUYZER H.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03.82